(19) Europäisches Patentamt
European Patent Office
Office européen des brevets

(11) Veröffentlichungsnummer: **0 208 278**
A2

(12) # EUROPÄISCHE PATENTANMELDUNG

(21) Anmeldenummer: 86109162.7

(22) Anmeldetag: 04.07.86

(51) Int. Cl.⁴: **G 02 B 6/44**

(30) Priorität: 06.07.85 GB 8517189
22.10.85 GB 8525986

(43) Veröffentlichungstag der Anmeldung:
14.01.87 Patentblatt 87/3

(84) Benannte Vertragsstaaten:
DE FR GB NL

(71) Anmelder: Pahl'sche Gummi- und Asbest-Gesellschaft
"PAGUAG" GmbH & Co.
Am Gatherhof
D-4000 Düsseldorf 30(DE)

(72) Erfinder: Gaedke, Herbert Wilhelm Paul
Christian-Kock-Weg
D-2332 Bohnert(DE)

(74) Vertreter: Patentanwälte Dipl.-Ing. W. Dahlke Dipl.-Ing.
H.-J. Lippert
Frankenforster Strasse 137
D-5060 Bergisch Gladbach 1(DE)

(54) **Schlauchleitung.**

(57) Bei Schlauchleitungen (1) aus flexiblem Material, die zum Leiten von Gasen, Flüssigkeiten und festen Partikeln dienen, sind in den Schlauchverband Leiter eingearbeitet, die zur Übertragung von Signalen dienen. Die bisher verwendeten elektrischen Leiter stellen aber für den Betrieb, insbesondere beim Leiten explosiver Medien, eine Gefahr dar. Um diese Gafahr auszuschließen, sind die Leiter als Lichtwellenleiter (7) aus optisch transparentem Material, beispielsweise aus Polyacrylat, Bleiglas oder Silicatglas, ausgebildet. Die Einarbeitung der Lichtwellenleiter in den Schlauchverband erfolgt schraubenlinienförmig, schlangenlinienförmig oder zickzackförmig.

FIG.1

EP 0 208 278 A2

Croydon Printing Company Ltd

Dipl.-Ing. W. Dahlke
Dipl.-Ing. H.-J. Lippert
Patentanwälte
Frankenforster Straße 137
5060 Berglsch Gladbach 1

3. Juli 1986   L/Sti

PAGUAG GmbH & Co.
4000 Düsseldorf 30

### "Schlauchleitung"

Die Erfindung betrifft eine Schlauchleitung aus flexiblem Material mit in den Schlauchverband eingearbeiteten Leitern zur Übertragung von Signalen.

Bei bekannten Schlauchleitungen der genannten Art bestehen die eingearbeiteten Leiter beispielsweise aus Kupferlitzen, durch die elektrische Impulse zur Übermittlung von Meß-, Registrier- oder Nachrichtendaten geleitet werden. Solche elektrischen Leiter werden parallel zur Schlauchachse oder in Wendelform während des Schlauchherstellungsprozesses vor der Vulkanisation in die Schlauchwandung eingearbeitet. Nach der Vulkanisation werden die elektrischen Leiter am Schnittende der Schlauchleitung freigelegt und über die Armaturen mit Schalt- oder Steuervorrichtungen verbunden.

Elektrische Leiter, die in die Schlauchwand eingearbeitet sind, sind insbesondere bei der Förderung leicht entzündlicher gasförmiger oder flüssiger Medien problematisch. Wenn aufgrund äußerer Einflüsse der elektrische Leiter beschädigt oder zerstört wird, können Funken entstehen, die zu einem Brand der Schlauchleitung führen können. Andererseits kann aufgrund eines zu geringen Querschnitts des elektrischen Leiters oder durch Anlegung zu hoher Spannungen an den Leiter die Schlauchwand überhitzt werden, wodurch ebenfalls Brandgefahr besteht.

Der Erfindung liegt die Aufgabe zugrunde, eine Schlauchleitung der eingangs genannten Art derart zu gestalten, daß die in die Wandung eingearbeiteten Leiter keine Gefahr für den Betrieb darstellen.

Erfindungsgemäß wird diese Aufgabe dadurch gelöst, daß die Leiter als Lichtwellenleiter aus optisch transparentem Material ausgebildet sind.

Lichtwellenleiter, die z.B. aus Polyacrylat, Bleiglas oder Silicatglas bestehen, sind ausreichend flexibel und lassen sich ohne weiteres in die Wandung einer flexiblen Schlauchleitung einarbeiten.

Lichtwellenleiter können nahezu störungsfrei und absolut sicher arbeiten. Es gibt keine Gefahr der Überhitzung, der Isolationsverschlechterung und von Kurzschlüssen. Ein unbeabsichtigtes Trennen oder ein Bruch der Leiter verursachen keine Funken. Dadurch wird insbesondere in gefährlicher oder explosiver Umgebung ein wesentliches Unfallproblem, welches bei den bekannten Schlauchleitungen durch die zur Signalübertragung dienenden Kupferlitzen besteht, zuverlässig und auf einfache Weise beseitigt.

Vorzugsweise sind die Lichtwellenleiter mit einer wärmebeständigen Ummantelung versehen, denn wenn die Lichtwellenleiter bei der Schlauchherstellung in den Schlauchverband eingearbeitet werden, werden diese zum Teil sehr hohen Temperaturen ausgesetzt und müssen folglich eine ausreichende Beständigkeit aufweisen.

Um zu gewährleisten, daß die Lichtwellenleiter bei starken Beanspruchungen der Schlauchleitung, wie z. B. Knickung oder Quetschung, nicht zerstört werden, können die Leiter schlangenlinienförmig oder zickzackförmig oder auch schraubenlinienförmig in den Schlauchverband eingearbeitet sein. Diese Leiteranordnung gewährleistet, daß sich die Leiter mit dem Schlauchmaterial verformen können, ohne überdehnt und damit beschädigt zu werden.

Die Lichtwellenleiter werden zweckmäßig in einem Abstand vor dem Schlauchende aus dem Schlauchmaterial herausgeführt. Dadurch besteht der Vorteil, daß die Leiterenden außerhalb des Schlauchverbands problemlos mit anderen Leitern oder sonstigen Anschlüssen gekoppelt werden können. Ferner besteht auch die Möglichkeit, daß ein kurzer Schlauchabschnitt zu Prüfzwecken abgetrennt werden, ohne daß dadurch der Lichtwellenleiter tangiert wird.

Die Lichtwellenleiter sind an ihren aus dem Schlauchmaterial herausgeführten Enden vorzugsweise mit einem Koppler, beispielsweise einem Steckverbinder, versehen. Dadurch ist eine besonders leichte Verbindung zu den entsprechenden Anschlußstellen möglich.

Wenn die Schlauchleitungen an ihren Verbindungsenden mit Halbschalenarmaturen versehen sind, können die Enden der Lichtwellenleiter in den freien Bereichen zwischen den Halbschalen aus dem Schlauchmaterial herausgeführt und an einen Steckverbinder angeschlossen sein, der an der Außenseite einer Halbschale sitzt.

Die Erfindung ist in der Zeichnung beispielsweise veranschaulicht und im nachstehenden im einzelnen anhand der Zeichnung beschrieben. Es zeigen:

4

Fig. 1 ein Ausführungsbeispiel einer Schlauchleitung, teilweise im Schnitt, mit einem schraubenlinig in den Schlauchverband eingearbeiteten Lichtwellenleiter,

Fig. 2 ein Anwendungsbeispiel für eine Schlauchleitung gemäß Fig. 1,

Fig. 3 einen Lichtwellenleiter in einer zickzackförmigen Verlegeart,

Fig. 4 ein Lichtwellenleiter in einer schlangenlinienförmigen Verlegeart,

Fig. 5 den Endabschnitt einer Schlauchleitung mit einem aus dem Schlauchmaterial herausgeführten Lichtwellenleiter,

Fig. 6 ein Schlauchende mit einer Halbschalenarmatur, an deren Außenseite ein Steckverbinder für den Lichtwellenleiter angeordnet ist, und

Fig. 7 einen Schnitt entlang der Linie VII-VII aus Fig. 6

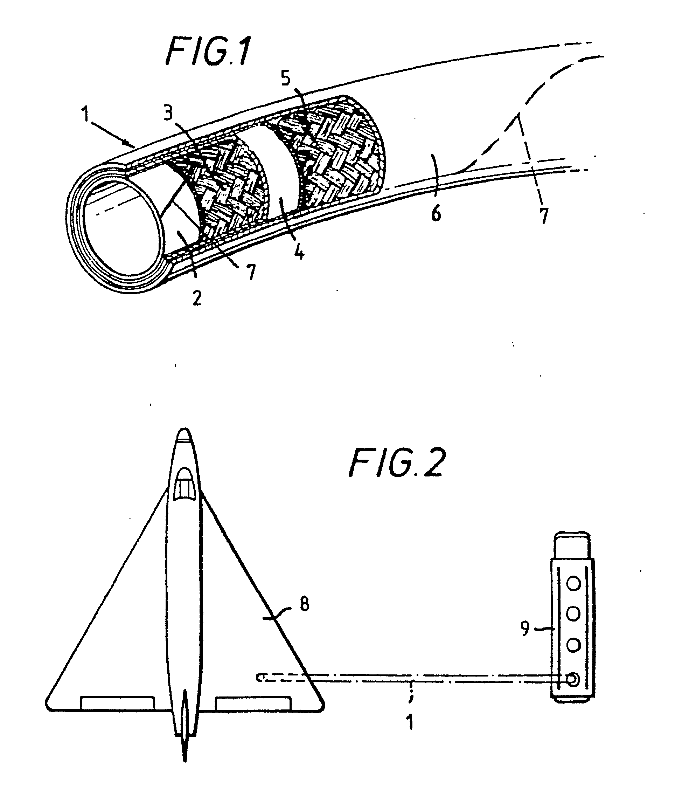

Nach Fig. 1 der Zeichnung, in der ein Ausführungsbeispiel einer Schlauchleitung 1 dargestellt ist, besteht diese aus einer Seele 2, einer inneren Verstärkungslage 3, einer Zwischenschicht 4, einer äußeren Verstärkungslage 5 sowie einer Deckschicht 6.

Die Seele 2, die Zwischenschicht 4 sowie die Deckschicht 5 können je nach Anwendungsfall aus Gummi, Gummimischungen oder sonstigem Elastomerematerial gebildet sein. Die beiden Verstärkungslagen 3 und 5 bestehen in dem vorliegenden Beispiel aus einem Cordgewebe.

Zwischen der Seele 2 und der inneren Verstärkungslage 3 ist ein Lichtwellenleiter 7 eingearbeitet, der sich schraubenlinienförmig um die Seele 2 herum erstreckt.

Wie insbesondere in Figur 2 veranschaulicht, dient eine solche Schlauchleitung 1 beispielsweise zur Betankung eines Flugzeugs 8, wobei die Schlauchleitung 1 einen Entnahmestutzen eines Tankwagens 9 mit dem Einfüllstutzen eines Flugzeugtanks verbindet. Alternativ kann die Schlauchleitung 1 selbstverständlich auch an den Entnahmestutzen einer stationär im Flugfeld gelegten Benzinleitung angeschlossen werden.

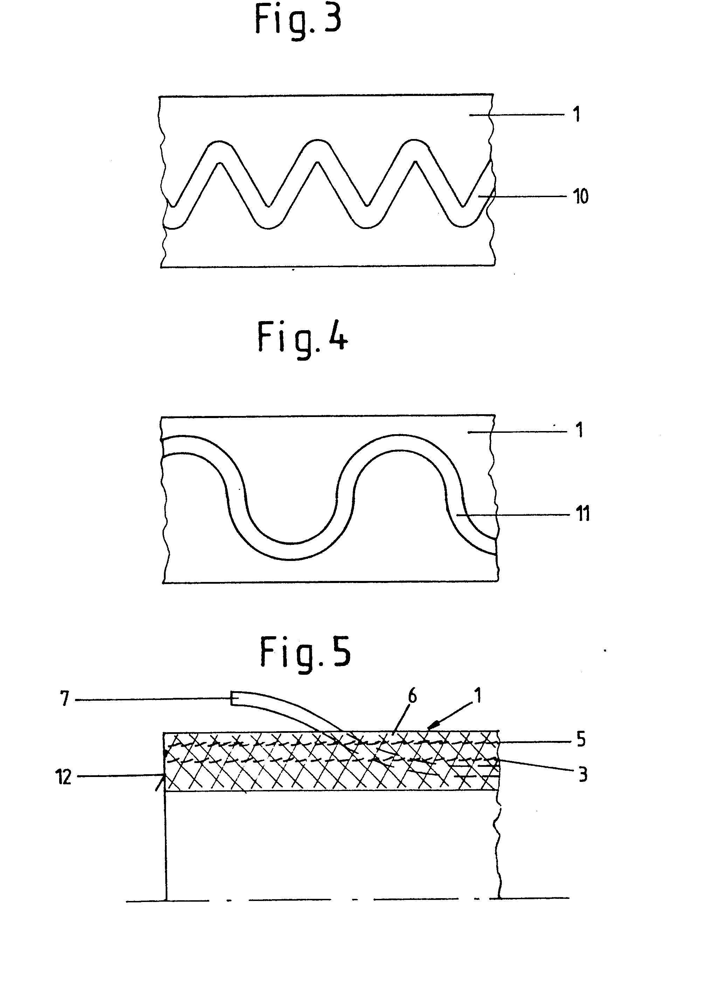

Wie aus Fig. 3 und 4 zu entnehmen ist, können die Lichtwellenleiter auch in anderer Verlegeart in das Schlauchmaterial eingebettet sein. In Fig. 3 ist eine Zick-Zack-Anordnung und in Figur 4 eine schlangenlinienförmige Anordnung veranschaulicht. Prinzipiell ist zwar jede Verlegeart möglich, beispielsweise auch eine Verlegung entlang einer Mantellinie der Schlauchleitung, jedoch sind die in Figuren 1, 3 und 4 dargestellten Verlegearten günstiger, da sie einen besseren Schutz gegen Beschädigungen des Lichtwellenleiters gewähren.

Schläuche der beschriebenen Art können beispielsweise dadurch hergestellt werden, daß zunächst die Seele 2 extrudiert und dann auf einen Dorn aufgezogen wird. Danach wird auf die Seele durch Drehung des Dorns das die Verstärkungslage bildende Gewebe schraubenlinienförmig aufgebracht. Die Schlauchleitung kann dann noch mehrere Verstärkungslagen erhalten, die jeweils durch eine Zwischenschicht von der darunterliegenden Verstärkungslage getrennt ist. Die am Schluß aufgebrachte Deckschicht 6 dient als Schutz für den Schlauch, beispielsweise gegen Abrieb, Umwelt und dergleichen.

Wenn in das Schlauchmaterial ein Lichtwellenleiter 7, 10 oder 11 eingebracht werden soll, so kann dies auf verschiedene Weise erfolgen. Eine Möglichkeit besteht darin, zunächst die Seele zu extrudieren und den Lichtwellenleiter dann außen auf die Seele aufzulegen. Die darüber aufgebrachten Schichten halten den Lichtwellenleiter dann in seiner Lage. Alternativ kann der Lichtwellenleiter oder können auch mehrere Lichtwellenleiter zwischen andere Schichten des Schlauchaufbaus eingebracht werden. Je nach Anwendungsfall ist es auch möglich, den Lichtwellenleiter auf der äußeren Oberfläche des Schlauchmaterials anzuordnen. Im letzteren Falle sollte möglichst noch eine hochfeste Schicht über dem Lichtwellenleiter aufgebracht werden, um einen ausreichenden Schutz für diesen zu schaffen.

Wie aus Figur 5 zu erkennen ist, wird der Lichtwellenleiter in einem Abstand vor dem Endquerschnitt 12 der Schlauchleitung 1 aus dem Schlauchmaterial herausgeführt. Bei dem in Figur 5 dargestellten Ausführungsbeispiel ist dies anhand des Schlauchaufbaus gemäß Figur 1 veranschaulicht. Der Lichtwellenleiter 7 wird zum Ende des Schlauches so geführt, daß er durch die einzelnen Schlauchschichten, auch durch die beiden Verstärkungslagen 3 und 5, allmählich nach oben geführt wird, um dann schräg aus der Deckschicht 6 herauszutreten. Diese Konzeption weist nicht nur den Vorteil auf, daß zu Prüfzwecken am Ende der Schlauchleitung ein Stück abgeschnitten werden kann, ohne daß der Lichtwellenleiter dadurch in Mitleidenschaft gezogen wird, sondern der frei herausgeführte Lichtwellenleiter 7 läßt sich auch leicht mit einem entsprechenden Koppler verbinden.

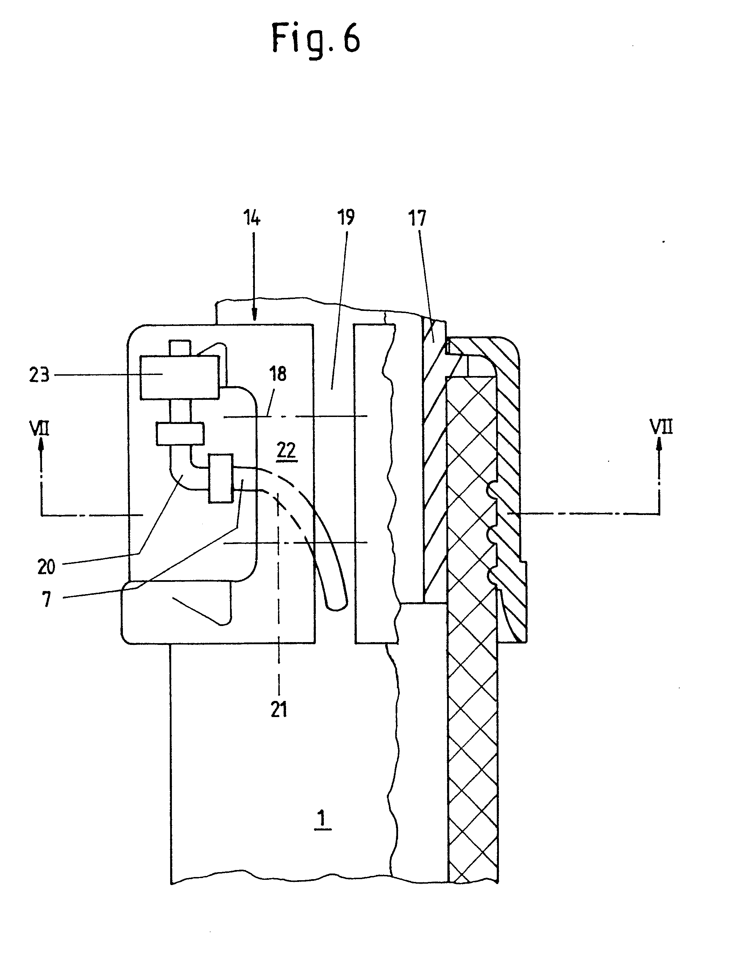

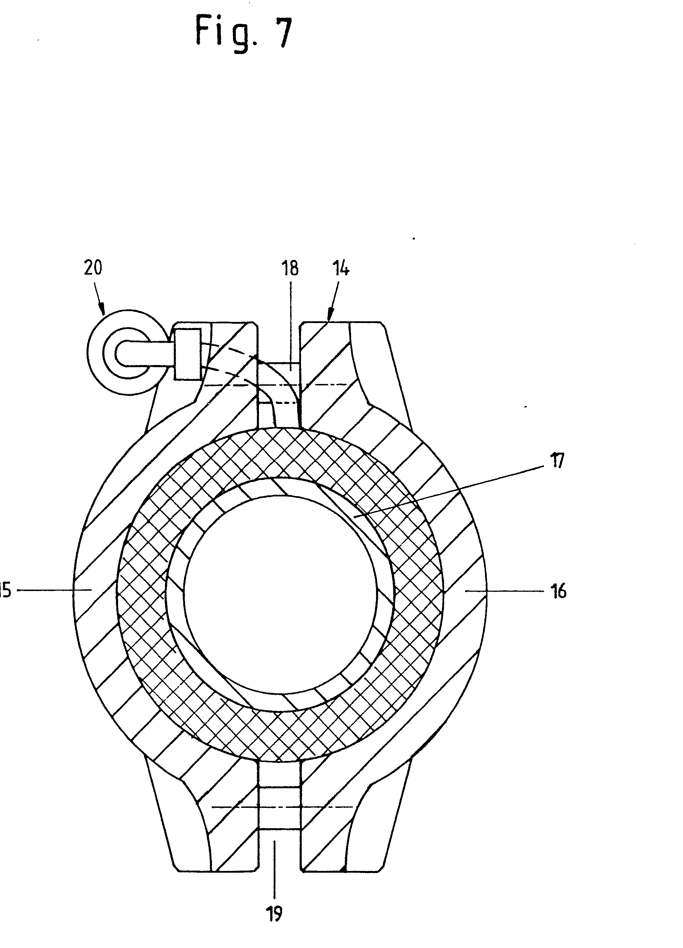

In Figur 6 und 7 ist die Verbindung des Lichtwellenleiters 7 mit einem Steckverbinder 13 veranschaulicht, der an der Außenseite einer Halbschalenarmatur 14 befestigt ist.

Die Halbschalenarmatur 14 besteht aus zwei Halbschalen 15 und 16 aus Metall, die den Umfang des Schlauchendes umgreifen, sowie einem ebenfalls aus Metall gefertigten Hülsenteil 17, das im Bereich der Halbschalen 15 und 16 in das offene Ende der Schlauchleitung eingreift und ein Widerlager für die beiden anzudrückenden Halbschalen bildet. Die beiden Halbschalen 15 und 16 werden auf ihren beiden gegenüberliegenden Seiten mit Hilfe von je zwei Schrauben 18 zusammengehalten, wobei jeweils zwischen den einander gegenüberliegenden Anschlußbereichen der Halbschalen ein freier Bereich 19 verbleibt, der breiter ist als der Querschnitt des Lichtwellenleiters 7, so daß dieser problemlos durch den freien Bereich 19 hindurchgeführt werden kann.

An einer der beiden Halbschalen, im vorliegenden Fall an der rechten Halbschale 15, ist ein Steckverbinder 20 befestigt, in den das freie Ende des Lichtwellenleiters 7 hineingeführt ist. Der Lichtwellenleiter 7 ist durch eine schräge Bohrung 21 oder einen äußeren Einschnitt in dem betreffenden Befestigungsflansch 22 der Halbschale 15 zwischen den beiden Schrauben 18 hindurchgeführt. Als Steckverbinder 20 ist ein solcher mit einem Winkelabgang von 90° gewählt, so daß das seitlich aus dem Befestigungsflansch 22 heraustretende Ende des Lichtwellenleiters 7 direkt in das angrenzende Winkelstück des Steckverbinders 20 eingeführt werden kann.

8

Die Steckdose 23 des Steckverbinders, in die ein Anschlußkabel eingesteckt werden kann, liegt dann wieder genau axial zu der Längsachse der Schlauchleitung.

Eine entsprechende Verbindung ist zweckmäßig auch an dem in der Zeichnung nicht dargestellten zweiten Ende der Schlauchleitung 1 vorgesehen.

Eine Schlauchleitung 1 mit einer derartigen Verbindung läßt sich sehr vorteilhaft bei dem in Fig. 2 dargestellten Anwendungsfall einsetzen, bei dem die Schlauchleitung 1 das Tankfahrzeug 9 mit dem Flugzeug 8 verbindet. Während des Betankungsvorgangs können durch den Lichtwellenleiter 7 hindurch einzelne Signale zwischen dem Flugzeug und dem Tankfahrzeug ausgetauscht werden. Dazu wird in das eine Ende ein Lichtstrahl aus einer Lichtquelle, beispielsweise einer lichtemittierenden Diode oder einem Laser, durch den Lichtwellenleiter geschickt, wobei der Lichtstrahl am anderen Ende von einem entsprechenden Empfänger aufgenommen wird. Die Geräte an beiden Enden sind so ausgebildet, daß sie sowohl senden als auch empfangen können. Auf diese Weise kann ein Datenaustausch in beiden Richtungen erfolgen. Die Daten werden durch entsprechende Modulation des Lichtes übertragen.

Bei dem in Figur 2 dargestellten Anwendungsfall werden beispielsweise Informationen bezüglich des Benzintyps, der Benzinmenge, des Flugzeugtyps usw. ausgetauscht. Wenn nötig können Verstärker oder dergleichen in den optischen Weg eingebaut werden.

Weitere Anwendungsmöglichkeiten liegen bei allen denkbaren Betankungs- und Entleerungsvorgängen, bei Kesselwagen, Schiffen, Öltanks und dergleichen aber auch bei Sandstrahlgebläsen, Dampfstrahlreinigungsanlagen, Staubsaugern und dergleichen sowie bei sonstigen Leitungen aller Art vor.

Bei den meisten üblichen Anwendungsmöglichkeiten kommt man in der Regel mit einem einzigen Lichtwellenleiter aus, auch wenn eine große Anzahl von Informationen in beiden Richtungen ausgetauscht wird. Da die Lichtwellenleiter eine sehr große Informationsübertragungskapazität haben, kann man die Vielzahl der Informationen gleichzeitig durch den Lichtwellenleiter hindurchsenden. Bei den herkömmlichen elektrischen Leitern war das nicht möglich, es sei denn, daß mehrere parallele Leiter in den Schlauchverband eingearbeitet waren.

Selbstverständlich ist es auch möglich, mehrere Lichtwellenleiter parallel zu verlegen, beispielsweise aus Sicherheitsgründen, jedoch ist dies in der Regel nicht erforderlich, zumal die Lichtwellenleiter gut geschützt in die Schlauchleitung eingearbeitet werden können.

Die Lichtwellenleiter können auch dazu herangezogen werden, frühzeitig das Bersten eines Schlauches anzuzeigen. In der Regel wird der Lichtwellenleiter vor dem Bersten des Schlauches reißen, so daß ein rechtzeitiges Alarmsignal erzeugt und empfangen werden kann.

Dipl.-Ing. W. Dahlke
Dipl.-Ing. H.-J. Lippert
Patentanwälte
Frankenforster Straße 137
5060 Bergisch Gladbach 1

PAGUAG GmbH & Co.
4000 Düsseldorf 30

3. Juli 1986 L/Sti

## Patentansprüche

1. Schlauchleitung aus flexiblem Material mit in den Schlauchverband eingearbeiteten Leitern zur Übertragung von Signalen, d a d u r c h   g e k e n n z e i c h n e t , daß die Leiter als Lichtwellenleiter (7; 10; 11) aus optisch transparentem Material ausgebildet sind.

2. Schlauchleitung nach Anspruch 1, d a d u r c h   g e k e n n z e i c h n e t , daß die Lichtwellenleiter (7; 10;11) aus Polyacrylat, Bleiglas, Silicatglas oder dergleichen bestehen.

3. Schlauchleitung nach Anspruch 1 oder 2, d a - d u r c h   g e k e n n z e i c h n e t , daß die Lichtwellenleiter (7; 10; 11) mit einer wärmebeständigen Ummantelung versehen sind.

4. Schlauchleitung nach einem der Ansprüche 1 bis 3, d a d u r c h   g e k e n n z e i c h n e t, daß die Lichtwellenleiter schlangenlinienförmig (11) oder zickzackförmig (12) in den Schlauchverband eingearbeitet sind.

5. Schlauchleitung nach einem der Ansprüche 1 bis 3, d a d u r c h   g e k e n n z e i c h n e t , daß die Lichtwellenleiter (7) schraubenlinienförmig um die Schlauchseele in den Schlauchverband eingearbeitet sind.

6. Schlauchleitung nach einem der Ansprüche 1 bis 5, d a d u r c h   g e k e n n z e i c h n e t , daß die Lichtwellenleiter (7) in einem Abstand vor dem Ende (12) der Schlauchleitung aus dem Schlauchmaterial herausgeführt sind.

7. Schlauchleitung nach Anspruch 6, d a d u r c h   g e k e n n z e i c h n e t , daß die Lichtwellenleiter (7) an ihren aus dem Schlauchmaterial herausgeführten Enden mit einem Koppler versehen sind.

8. Schlauchleitung nach Anspruch 7, d a d u r c h   g e k e n n z e i c h n e t , daß der Koppler als Steckverbinder (20) ausgebildet ist.

9. Schlauchleitung nach einem der Ansprüche 6 bis 8, dessen Enden mit Halbschalenarmaturen (14) an andere Armaturen anschließbar sind, d a d u r c h   g e k e n n z e i c h n e t , daß die Enden der Lichtwellenleiter (7) in den freien Bereichen (19) zwischen den Halbschalen (15, 16) aus dem Schlauchmaterial herausgeführt sind.

10. Schlauchleitung nach Anspruch 9, d a d u r c h   g e k e n n z e i c h n e t , daß der jweilige Steckverbinder (20) an der Außenseite einer Halbschale (15) sitzt.

0208278

## FIG.1

## FIG.2

Fig.3

1

10

Fig.4

1

11

Fig.5

7

6  1

5

3

12

# Fig.6

0208278

Fig. 7